# EUROPÄISCHE PATENTSCHRIFT

(11) **EP 1 117 301 B1**
(45) Veröffentlichungstag und Bekanntmachung des Hinweises auf die Patenterteilung: **18.06.2003**
(21) Anmeldenummer: 99944150.4
(22) Anmeldetag: 09.09.1999
(51) Int. Cl.: A21D 15/00, A21D 13/08, A21C 15/02

(54) **VERFAHREN ZUR HERSTELLUNG EINES WAFFELPRODUKTES UND ANLAGE ZUR DURCHFÜHRUNG DIESES VERFAHRENS**
METHOD FOR PRODUCING A WAFFLE PRODUCT AND ARRANGEMENT FOR CARRYING OUT THIS METHOD
PROCEDE ET DISPOSITIF PERMETTANT DE FABRIQUER UNE GAUFRE

(30) Priorität: 01.10.1998 AT 163398
(43) Veröffentlichungstag der Anmeldung: 25.07.2001
(73) Patentinhaber: Masterfoods Austria OHG, 7091 Breitenbrun (AT)
(72) Erfinder: DRAGANITSCH, Karl, A-7082 Donnerskirchen (AT); FILA,Rudolf, A-2344 Maria Enzersdorf (AT)
(74) Vertreter: Atzwanger, Richard, Dipl.-Ing. Patentanwalt
(86) Internationale Anmeldenummer: AT9900219
(87) Internationale Veröffentlichungsnummer: WO00019829

(56) Entgegenhaltungen:
- EP-A- 0 012 588
- EP-A- 0 170 770
- BE-A- 546 578
- DE-A- 2 508 533
- GB-A- 1 468 930
- US-A- 4 600 591

## Beschreibung

Die gegenständliche Erfindung betrifft ein Verfahren zur Herstellung eines ein Nahrungsmittel enthaltenden Waffelproduktes unter Verwendung von mindestens zwei Waffelblättern sowie eine Anlage zur Herstellung eines derartigen Waffelproduktes.

Es ist eine Vielzahl von Waffelprodukten bekannt, welche aus Waffelblättern und zwischen den Waffelblättern befindlichen Füllungen, wie Süßwaren, Fleischwaren oder Käsewaren, bestehen. Da die Waffelblätter einem Backvorgang unterzogen werden, können diese deshalb keine solchen Bestandteile, welche Vitamine, Geschmacksstoffe u.dgl. aufweisen, enthalten, da diese Bestandteile durch den Backvorgang geschädigt oder verdorben werden würden. Vielmehr bestehen die bekannten Waffelprodukte aus mehreren Waffelblättern, welche nach dem Backvorgang unter Zwischenlage von Füllungen, welche aus weiteren Nahrungsmitteln bestehen, miteinander zu einem Produkt verbunden werden.

In der Regel weisen Teige, welche für die Herstellung von Waffelblättern verwendet werden, einen Zuckergehalt von etwa 3 % bis 5 % auf. Mit einem derartigen Zuckergehalt sind die Waffelblätter im Geschmack neutral. Zudem sind Waffelblätter mit einem derartigen Zuckergehalt nach dem Backvorgang nicht verformbar, sondern sind sie selbst in noch warmem Zustand relativ spröde, weswegen sie bei allfälligen Verformungen zerbrechen.

Es sind weiters Waffelmassen bekannt, welche einen Zuckergehalt von mehr als 23 % aufweisen. Durch einen derartigen Zuckergehalt können die Waffelblätter nach dem Backvorgang verformt, z.B. zu hohlzylindrischen Körpern verformt, werden, in welche eine Füllung, z.B. eine Schokolademasse, eingebracht werden kann. Es wird hiezu beispielsweise auf die EP 12588 A1 verwiesen. Dessen ungeachtet verbleibt jedoch auch bei derartigen Waffelprodukten die Tatsache, daß die Waffeln selbst keinerlei andere Nahrungsmittel, insbesondere keine solchen, welche spezifische Geschmacksempfindungen bewirken, enthalten.

Der gegenständlichen Erfindung liegt somit die Aufgabe zugrunde, Waffelblätter zu schaffen, durch welche unterschiedlichste Geschmacksempfindungen bewirkt werden können. Dies wird erfindungsgemäß dadurch erzielt, daß auf ein erstes aus dem Backofen angefördertes noch heißes Waffelblatt, welches in an sich bekannter Weise einen Gehalt an Zucker bzw. an Trehalose von mindestens 23 % aufweist, eine Schichte eines Nahrungsmittelproduktes, z.B. einer Süßware, einer Fleischware, einer Fischware, einer Käseware, eines Obstproduktes, eines Gemüseproduktes od.dgl. oder von Nüssen oder Mandeln usw., aufgebracht wird, daß auf diese Schichte ein zweites noch heißes Waffelblatt gleichfalls mit einem Gehalt an Zucker bzw. an Trehalose von mindestens 23 % aufgebracht wird und daß hierauf die beiden die Schichte mit einem Nahrungsmittelprodukt enthaltenden heißen Waffelblätter miteinander durch Verpressung verbunden und räumlich verformt werden.

Ein besonderer Vorteil dieses Verfahrens besteht darin, daß hierdurch unter Verwendung unterschiedlicher Preßformen beliebig geformte Waffeln hergestellt werden können. Dies ist deshalb von Bedeutung, da gemäß dem Stand der Technik für unterschiedlich geformte Waffeln jeweils eine Vielzahl von unterschiedlichen Backformen erforderlich war, wogegen beim erfindungsgemäßen Verfahren nur unterschiedliche Preßformen erforderlich sind. Dieser Sachverhalt ist deshalb von entscheidender Bedeutung, da die Ausrüstung eines Backofens mit geänderten Backformen einen hohen technischen und zeitlichen Aufwand bedingt, wogegen außerhalb des Backofens befindliche Preßformen innerhalb kurzer Zeit gegen geänderte Preßformen austauschbar sind. Da zudem die Herstellungskosten von Preßformen viel geringer sind als diejenigen von Backformen, werden hierdurch maßgebliche Einsparungen erzielt

Dabei können die miteinander verpreßten Waffelblätter in einzelne Hohlkörper zerschnitten werden, in welche anschließend eine Füllung eingebracht wird. -Zudem können die einzelnen Waffelprodukte mit einer äußeren Beschichtung versehen werden. Zudem können mehr als zwei heiße Waffelblätter mit dazwischen befindlichen Schichten von Nahrungsmitteln miteinander verpreßt und verformt werden.

Bei einer erfindungsgemäßen Anlage zur Herstellung von Waffelblättern mit einem Backautomaten und einer Fördereinrichtung sind eine Einrichtung zum Anheben jeweils eines ersten Waffelblattes eines Paares von heißen Waffelblättern, weiters eine Dosiereinrichtung zum Aufbringen eines Nahrungsmittelproduktes auf das jeweils zweite Waffelblatt und eine Einrichtung zum Verpressen und räumliches Verformen der beiden übereinander befindlichen und eine Schichte eines Nahrungsmittelproduktes enthaltenden heißen Waffelblätter vorgesehen. Dabei kann die Preßeinrichtung als Verformungseinrichtung ausgebildet sein bzw. kann sie durch eine Saugeinrichtung gebildet sein. Vorzugsweise ist weiters eine Trenneinrichtung, insbesondere eine Stanzeinrichtung, vorgesehen, durch welche die miteinander verbundenen Waffelblätter in einzelne Hohlkörper zerteilbar sind.

Eine Anlage zur Durchführung des erfindungsgemäßen Verfahrens bzw. zur Herstellung eines erfindungsgemäßen Waffelproduktes ist nachstehend anhand eines in der Zeichnung dargestellten Ausführungsbeispiels näher erläutert. Es zeigen:
- Fig.1: eine Anlage zur Herstellung eines erfindungsgemäßen Waffelproduktes, in axonometrischer Darstellung,
- Fig.2: eine erste Arbeitsstation dieser Anlage, eine zweite Arbeitsstation und eine dritte Arbeitsstation dieser Anlage, wobei sich die dritte Arbeitsstation in einer ersten Betriebsstellung befindet, jeweils in axonometrischer Darstellung,
- Fig.3: die dritte Arbeitsstation dieser Anlage in einer zweiten Betriebsstellung, in axonometrischer Darstellung,
- Fig.4: die dritte Arbeitsstation dieser Anlage in einer dritten Betriebsstellung, in axonometrischer Darstellung,
- Fig.5: eine vierte Arbeitsstation dieser Anlage, in schematisierter Seitenansicht,
- die Fig.5a und 5b: Ausführungsvarianten der vierten Arbeitsstation, in schematischer Seitenansicht, und
- Fig.6: eine fünfte Arbeitsstation dieser Anlage, gleichfalls in schematisierter Seitenansicht.

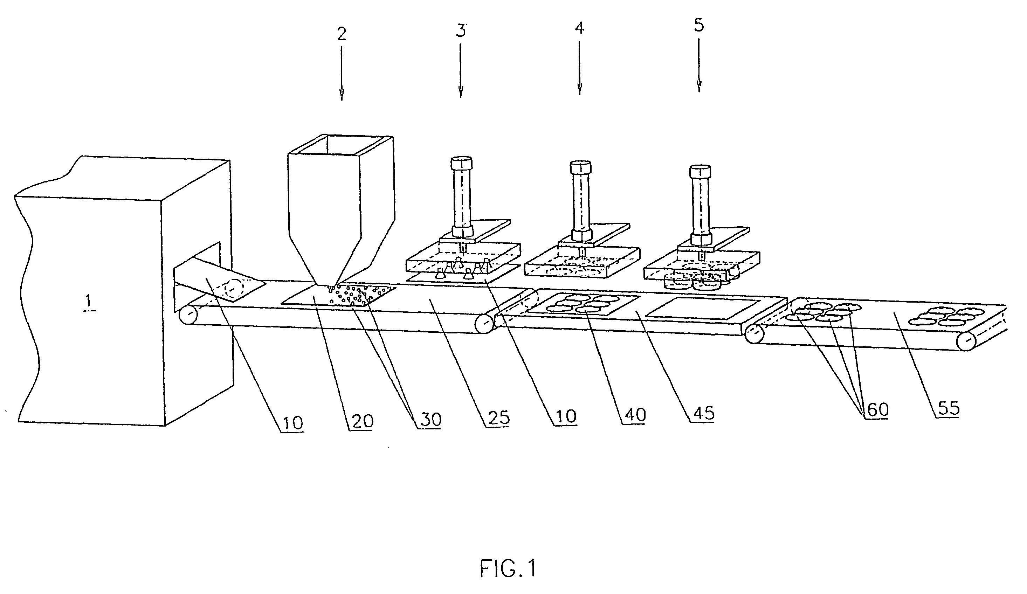

Die in Fig. 1 dargestellte Anlage zur Herstellung eines Waffelblattes besteht aus einer durch einen Backautomaten 1 gebildeten ersten Arbeitsstation für die Erzeugung von Waffelblättern 10 und 20, weiters aus einer zweiten Arbeitsstation 2, in welcher jeweils auf ein zweites Waffelblatt 20 ein Nahrungsmittelprodukt 30 aufgebracht wird, aus einer dritten Arbeitsstation 3, in welcher die beiden Waffelblätter 10 und 20 aufeinander gelegt werden, aus einer vierten Arbeitsstation 4, in welcher die beiden übereinander befindlichen Waffelblätter 40 miteinander verpreßt werden, und einer fünften Arbeitsstation 5, in welcher die miteinander verpreßten und gegebenenfalls verformten Waffelblätter in einzelne Produkte 60 unterteilt werden. Den Arbeitsstationen 2, 3, 4 und 5 sind Förderbänder 25 und 45 zugeordnet.
Von der fünften Arbeitsstation 5 werden die Waffelblätter 60 mittels einer Fördereinrichtung 55 abgefördert und der weiteren Verarbeitung sowie anschließend der Verpackung zugeführt.

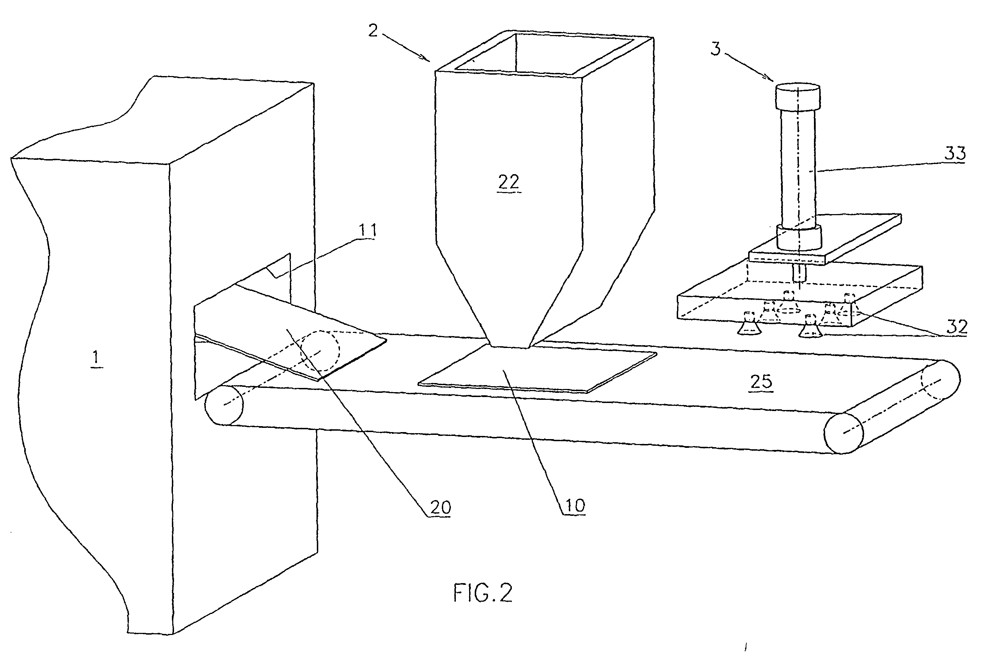

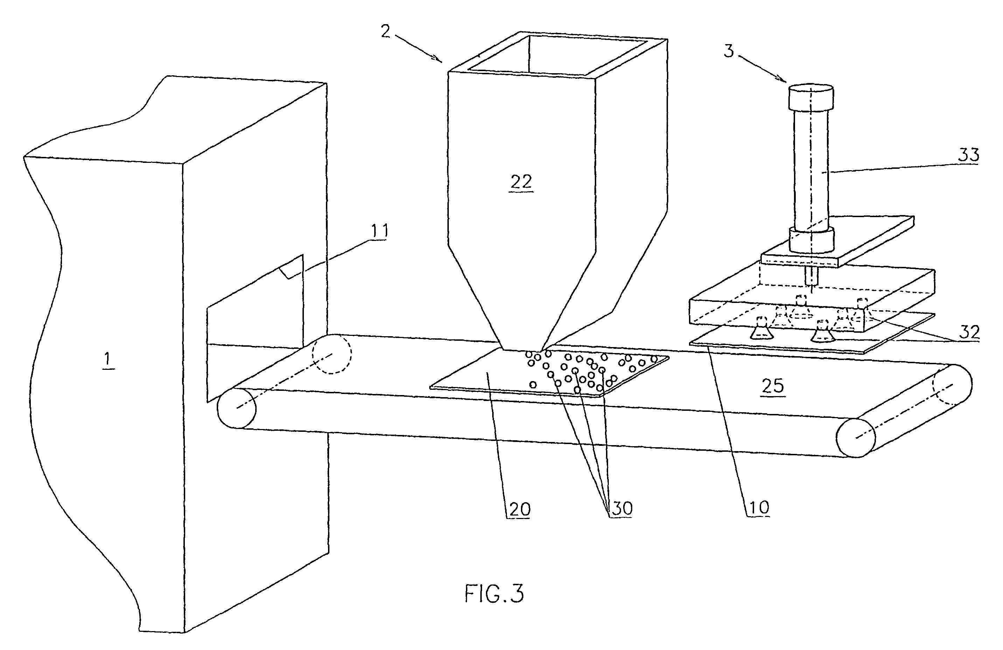

Wie dies insbesondere aus den Fig.2 und 3 ersichtlich ist, werden vom Backautomaten 1 über eine Ausgabeöffnung 11 aufeinanderfolgend erste und zweite Waffelblätter 10 und 20 an ein der zweiten Arbeitsstation 2 und der dritten Arbeitsstation 3 zugeordnetes Förderband 25 übergeben. Das jeweils erste Waffelblatt 10 eines Paares von Waffelblättern 10 und 20 wird mittels des Förderbandes 25 unter einer Dosiereinrichtung 22 hindurch zur dritten Arbeitsstation 3, welche als Hebeeinrichtung ausgebildet ist, bewegt, in welcher es z.B. mittels Saugnäpfen 32, welche mittels eines Stellzylinders 33 höhenverstellbar sind, angehoben wird. Gleichzeitig gelangt das jeweils zweite Waffelblatt 20 unter die Dosiereinrichtung 22, durch welche es mit einem Nahrungsmittelprodukt 30, z.B. einer Süßware, einer Fleischware, einer Fischware, einer Käseware, einem Obstprodukt, einem Gemüseprodukt od.dgl. oder mit Nüssen oder Mandeln, beschichtet wird.

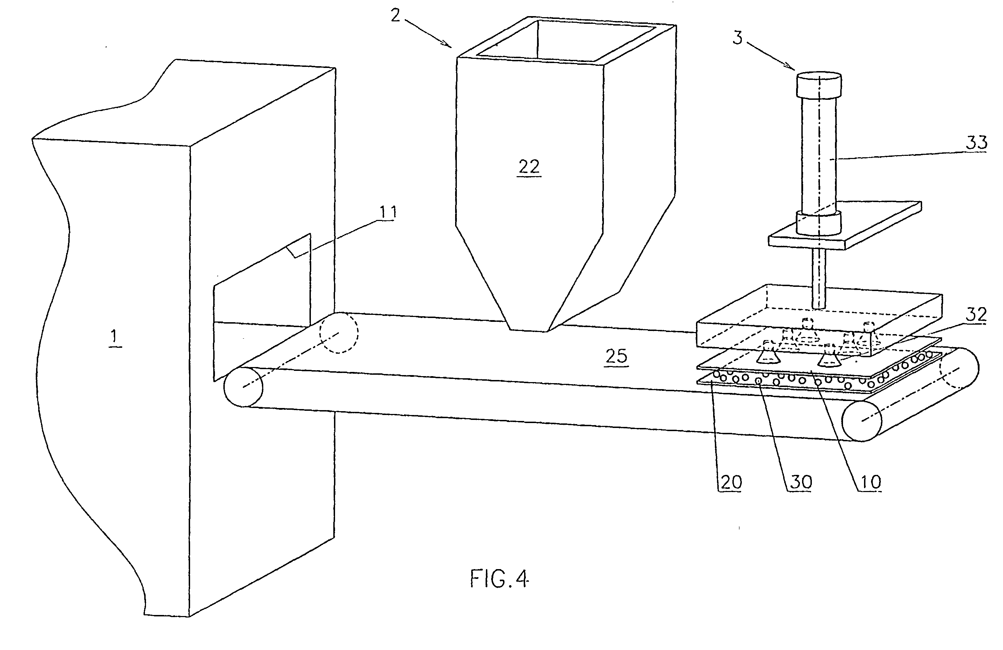

In weiterer Folge wird das mit einem Nahrungsmittelprodukt 30 beschichtete zweite Waffelblatt 20 mittels des Förderbandes 25 unter das in der Hebeeinrichtung 3 befindliche erste Waffelblatt 10 gefördert, worauf das erste Waffelblatt 10 auf das mit einem Nahrungsmittelprodukt 30 beschichtete zweite Waffelblatt 20 aufgesetzt wird. Es wird hierzu auf die Darstellung in Fig.4 verwiesen.

Dieses aus den beiden Waffelblättern 10 und 20 und der dazwischen befindlichen Lage eines Nahrungsmittelproduktes 30 bestehende Waffelblatt 40 wird hierauf vom Förderband 25 an das weitere Förderband 45 übergeben, von welcher sie zur vierten Arbeitsstation 4 bewegt wird, welche durch eine Einrichtung zur Verpressung dieses Waffelblattes 40 gebildet ist.

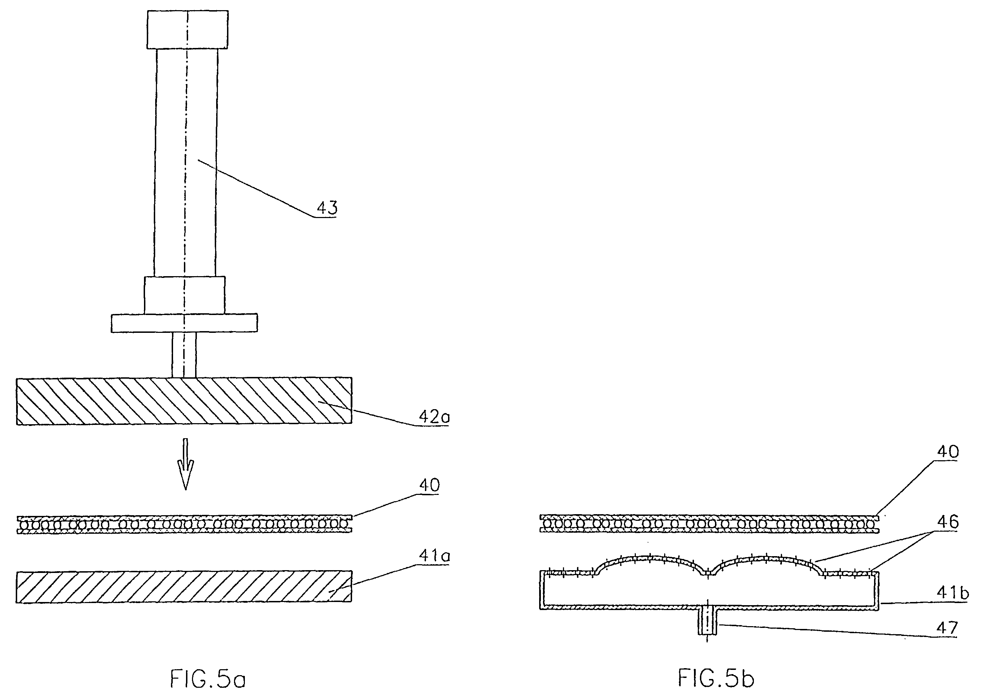

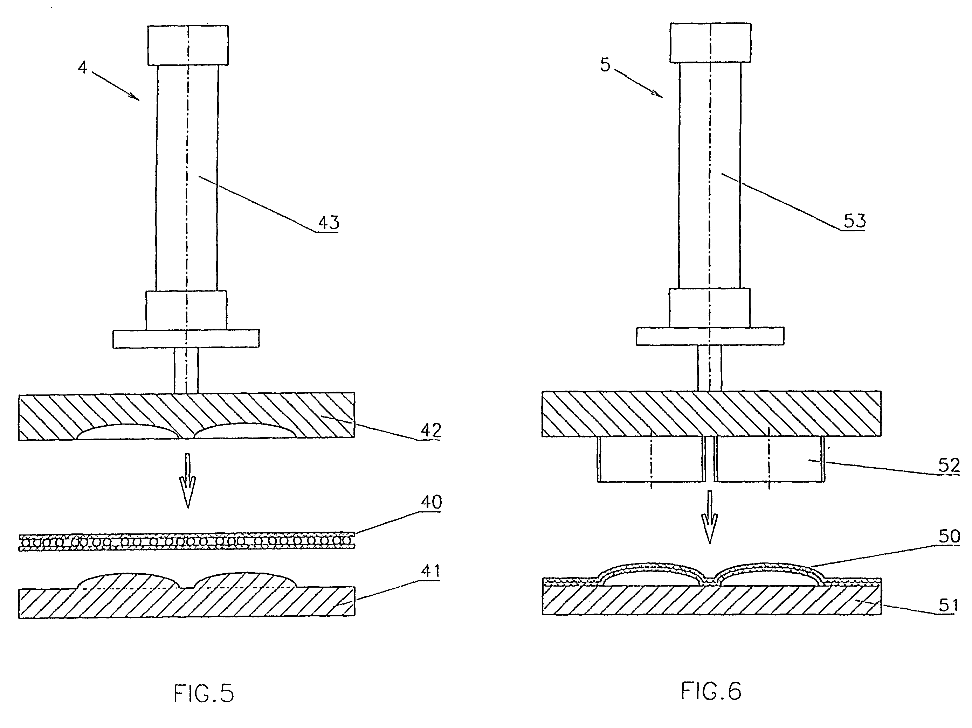

Wie dies aus Fig.5 ersichtlich ist, enthält die Preßeinrichtung 4 eine erste profilierte Preßplatte 41 und eine dieser zugeordnete zweite, gegengleich profilierte Preßplatte 42, zwischen welchen sich das Waffelblatt 40 befindet. Durch Absenken der zweiten Preßplatte 42 mittels eines Stellzylinders 43 wird das Waffelblatt 40 entsprechend der Ausbildung der beiden Preßplatten 41 und 42 verformt, wobei es z.B. schalenförmig ausgebildet wird. In weiterer Folge werden die derart verformten Waffelblätter 50 der in Fig.6 dargestellten fünften Arbeitsstation 5 zugeführt, welche durch eine Stanzeinrichtung gebildet ist. Die Stanzeinrichtung 5 enthält eine Grundplatte 51, auf welcher die Waffelblätter 50 aufliegen, und dieser zugeordnete Stanzwerkzeuge 52, welche mittels eines Stellzylinders 53 auf- und abbewegbar sind. Mittels dieser Stanzeinrichtung 5 werden aus den verformten Waffelblättern 50 schalenförmige Waffelkörper 60 herausgestanzt, welche über ein weiteres Förderband 55 abgefördert werden. In der Folge können diese Waffelkörper 60 mit einem weiteren Nahrungsmittel, z.B. mit einer Schokoladecreme, gefüllt, mittels eines weiteren Waffelblattes verschlossen und z.B. mittels einer Schokoladeschichte umhüllt werden. Gemäß einer Ausführungsvariante werden mittels der Stanzeinrichtung 5 im Waffelkörper 40 nur Sollbruchlinien hergestellt, wodurch die einzelnen Waffelkörper 60 in einem späteren Arbeitsgang voneinander getrennt werden können.

In den Fig.5a und 5b sind Ausführungsvarianten der vierten Arbeitsstation dargestellt. In Fig.5a ist eine Preßeinrichtung dargestellt, in welcher die Preßplatten 41a und 42a ebenflächig ausgebildet sind. In Fig.5b ist eine Verformungseinrichtung dargestellt, welche durch einen an einer Seite profilierten Hohlkörper 41b gebildet ist, welcher an der profilierten Fläche mit Saugöffnungen 46 ausgebildet ist und an welchen ein Saugstutzen 47 anschließt. An diesen Hohlkörper 41b kann das Waffelblatt 40 angesaugt werden, wodurch es gleichfalls profiliert wird.

Um zu gewährleisten, daß die Waffelblätter 10 und 20 nach dem Backvorgang jedenfalls kurzzeitig die für die Verformung erforderliche Elastizität beibehalten, muß der Waffelteig einen Zuckergehalt von mindestens 23 % aufweisen. Anstelle von Zucker kann auch ein Ersatzstoff mit den technologischen Eigenschaften von Zucker, z.B. Trehalose, verwendet werden. Maßgeblich dabei ist, daß die Waffelblätter in warmem Zustand eine so hohe Elastizität aufweisen, daß sie nach dem Backvorgang in warmem Zustand verformbar sind. Um die Waffelblätter auf der erforderlichen hohen Temperatur zu halten, befinden sich sämtliche Arbeitsstationen in einem geschlossenen Gehäuse, welches vorzugsweise mit Heißluft beaufschlagt wird. Nach dem Verformungsvorgang können die Produkte z.B. durch Zuführung von kalter Luft gekühlt werden.

Durch dieses Verfahren können somit geschichtete Waffelblätter mit beliebigen Geschmacksrichtungen gefertigt werden, welche zur Herstellung von beliebigen Waffelprodukten verwendet werden können. Da weiters durch dieses Verfahren aus ebenflächigen Waffelblättern mittels unterschiedlicher Preßformen beliebig geformte Waffelblätter hergestellt werden können, wodurch kein Erfordernis für unterschiedliche Backformen besteht, können mit geringen Mehrkosten eine Vielzahl von Waffelprodukten mit unterschiedlichsten Formen hergestellt werden.

In analoger Weise können auch mehr als zwei Waffelblätter mit dazwischen befindlichen Schichten von Nahrungsmitteln miteinander verpreßt und verformt werden.

## Patentansprüche

1. Verfahren zur Herstellung eines ein Nahrungsmittel enthaltenden Waffelproduktes unter Verwendung von mindestens zwei Waffelblättern (10, 20), **dadurch gekennzeichnet, daß** auf ein erstes aus dem Backofen angefördertes noch heißes Waffelblatt (20), welches in an sich bekannter Weise einen Gehalt an Zucker bzw. an Trehalose von mindestens 23 % aufweist, eine Schichte (30) eines Nahrungsmittelproduktes, z.B. einer Süßware, einer Fleischware, einer Fischware, einer Käseware, eines Obstproduktes, eines Gemüseproduktes od.dgl. oder von Nüssen, Mandeln usw., aufgebracht wird und daß auf diese Schichte ein zweites noch heißes Waffelblatt (10) mit einem Gehalt an Zucker bzw. an Trehalose von ebenfalls mindestens 23 % aufgebracht wird, worauf die beiden die Schichte (30) eines Nahrungsmittelproduktes enthaltenden heißen Waffelblätter (10, 20) miteinander durch Verpressung verbunden und räumlich verformt werden.

2. Verfahren nach Patentanspruch 1, **dadurch gekennzeichnet, daß** die miteinander verpreßten Waffelblätter (20, 10) in einzelne Hohlkörper (60) zerschnitten werden, in welche anschließend eine Füllung eingebracht wird.

3. Verfahren nach einem der Patentansprüche 1 und 2, **dadurch gekennzeichnet, daß** die einzelnen Waffelprodukte (60) mit einer äußeren Beschichtung versehen werden.

4. Verfahren nach einem der Patentansprüche 1 bis 3, **dadurch gekennzeichnet, daß** mehr als zwei heiße Waffelblätter mit dazwischen befindlichen Schichten von Nahrungsmitteln miteinander verpreßt und verformt werden.

5. Anlage zur Herstellung eines Waffelproduktes nach einem der Patentansprüche 1 bis 4, mit einem Backautomaten und mit einer Fördereinrichtung, **dadurch gekennzeichnet, daß** eine Einrichtung (3) zum Anheben jeweils eines ersten Waffelblattes (10) eines Paares von heißen Waffelblättern (10, 20), weiters eine Dosiereinrichtung (2) zur Aufbringung eines Nahrungsmittelproduktes (30) auf das jeweils zweite Waffelblatt (20) und eine Einrichtung (4) zum Verpressen und Verformen der beiden übereinander befindlichen und die Schichte (30) eines Nahrungsmittelproduktes enthaltenden heißen Waffelblätter (10, 20) vorgesehen sind.

6. Anlage nach Patentanspruch 5, **dadurch gekennzeichnet, daß** die Preßeinrichtung als Verformungseinrichtung (4) ausgebildet ist.

7. Anlage nach Patentanspruch 5, **dadurch gekennzeichnet, daß** die Verformungseinrichtung durch eine Saugeinrichtung (41b) gebildet ist.

8. Anlage nach einem der Patentansprüche 5 bis 7, **dadurch gekennzeichnet, daß** weiters eine Trenneinrichtung, insbesondere eine Stanzeinrichtung (5), vorgesehen ist, durch welche die miteinander verbundenen Waffelblätter (10, 20) in einzelne Hohlkörper zerteilbar sind.

## Claims

1. A method of producing a wafer product containing a foodstuff using at least two wafer sheets (10, 20), **characterised in that** there is applied to a first, still hot wafer sheet (20) conveyed out of the oven, which sheet (20) has in a manner known per se a sugar or trehalose content of at least 23 %, a layer (30) of a food product, e.g. a confectionery product, a meat product, a fish product, a cheese product, a fruit product, a vegetable product or the like, or nuts or almonds etc. and **in that** a second, still hot wafer sheet (10), likewise with a sugar or trehalose content of at least 23 %, is applied to this layer, whereupon the two hot wafer sheets (10, 20) containing the layer (30) of a food product are connected together by pressing and spatially shaped.

2. A method according to claim 1, **characterised in that** the pressed-together wafer sheets (20, 10) are cut into individual hollow bodies, into which a filling is then introduced.

3. A method according to one of claims 1 and 2, **characterised in that** the individual wafer products (60) are provided with an outer coating.

4. A method according to one of claims 1 to 3, **characterised in that** more than two hot wafer sheets with layers of foodstuffs located therebetween are pressed together and shaped.

5. An installation for producing a wafer product according to one of claims 1 to 5, having an automatic baking machine and a conveying device, **characterised in that** there are provided a device (3) for lifting a respective first wafer sheet (10) of a pair of hot wafer sheets (10, 20), also a dispensing device (2) for applying a food product (30) to the respective second wafer sheet (20) and a device (4) for pressing and shaping the two hot wafer sheets (10, 20) located one on top of the other and containing a layer (30) of food product.

6. An installation according to claim 5, **characterised in that** the pressing device takes the form of a shaping device (4).

7. An installation according to claim 5, **characterised in that** the shaping device takes the form of a suction device (41b).

8. An installation according to one of claims 5 to 7, **characterised in that** a separating device, in particular a punching device (5), is also provided, by means of which the connected-together wafer sheets (10, 20) may be divided into individual hollow bodies.

## Revendications

1. Procédé de fabrication d'une gaufre contenant un aliment en utilisant au moins deux feuilles de gaufre (10, 20), **caractérisé en ce que**, sur une première feuille de gaufre (20) encore chaude sortie du four, laquelle contient de manière connue en soi au moins 23% de sucre ou de tréhalose, est déposée une couche (30) d'un produit alimentaire, par exemple d'une sucrerie, d'une charcuterie, d'un produit de poissonnerie, d'un produit fromager, d'un produit fruitier, d'un produit légumier ou similaire ou de noix, d'amandes etc, et **en ce que** sur cette couche est déposée une deuxième feuille de gaufre (10) encore chaude et contenant également au moins 23% de sucre ou de tréhalose, moyennant quoi les deux feuilles de gaufre (10, 20) chaudes contenant la couche (30) d'un produit alimentaire sont reliées l'une à l'autre par pressage et déformées dans l'espace.

2. Procédé selon la revendication 1, **caractérisé en ce que** les feuilles de gaufre (20, 10) pressées l'une avec l'autre sont découpées en corps creux individuels (60), dans lesquels ont introduit par la suite une garniture.

3. Procédé selon l'une des revendications 1 et 2, **caractérisé en ce que** les gaufres individuelles (60) sont enrobées d'une couche extérieure.

4. Procédé selon l'une des revendications 1 à 3, **caractérisé en ce que** plus de deux feuilles de gaufres chaudes contenant des couches d'aliment situées entre elles sont pressées l'une avec l'autre et déformées.

5. Dispositif de fabrication d'une gaufre selon l'une des revendications 1 à 4, comprenant une machine automatique de cuisson et une installation de transport, **caractérisé en ce que** sont prévues une installation (3) pour soulever respectivement une première feuille de gaufre (10) d'une paire de feuilles de gaufre (10,20) chaudes, puis une installation de dosage (2) pour déposer un produit alimentaire (30) sur la deuxième feuille de gaufre (20) respective et une installation (4) pour presser et déformer les deux feuilles de gaufre (10, 20) chaudes situées l'une sur l'autre et contenant la couche (30) d'un produit alimentaire.

6. Dispositif selon la revendication 5, **caractérisé en ce que** l'installation de pressage est conçue comme une installation de déformation (4).

7. Dispositif selon la revendication 5, **caractérisé en ce que** l'installation de déformation est formée par une installation d'aspiration (41b).

8. Dispositif selon l'une quelconque des revendications 5 à 7, **caractérisé en ce qu'**est prévue en plus une installation de séparation, en particulier une installation de découpage (5), par laquelle les feuilles de gaufre (10, 20) reliées l'une à l'autre peuvent être divisées en corps creux individuels.
